# EUROPEAN PATENT APPLICATION

(11) **EP 4 598 072 A1**
(43) Date of publication of application: **06.08.2025**
(21) Application number: 23872055.1
(22) Date of filing: 20.09.2023
(51) Int. Cl.: H04W 4/90, H04W 4/06

(54) **NETWORK SYSTEM, TERMINAL, AND NOTIFICATION METHOD**

(30) Priority: 29.09.2022 JP 2022156591
(71) Applicant: Sharp Kabushiki Kaisha, Sakai City, Osaka 590-8522 (JP)
(72) Inventor: YAMAMOTO Makoto, Sakai City, Osaka 590-8522 (JP); YAMAZAKI Atsushi, Sakai City, Osaka 590-8522 (JP); HINATA Ryoki, Sakai City, Osaka 590-8522 (JP); SHINMEI Hideaki, Sakai City, Osaka 590-8522 (JP); KUNISADA Atsuko, Sakai City, Osaka 590-8522 (JP)
(74) Representative: Treeby, Philip David William
(86) International application number: PCT/JP2023/033999
(87) International publication number: WO 2024/070827

(57) **Abstract**

To enable a terminal to appropriately make a notification of emergency information from its own network in a case that the emergency information is distributed in multiple networks. A network system includes base stations in each of the multiple networks, and a terminal capable of communicative connection to any one of the multiple networks via radio communication. First identification information capable of identifying each of the multiple networks is configured in advance. The base station transmits emergency information to the terminal existing in a radio communication service area of the base station to allow the emergency information to be received by the terminal regardless of whether the terminal is communicatively connected to the base station, the emergency information being associated with the first identification information configured for the network to which the base station is communicatively connected. **In** a case that the terminal receives the emergency information associated with the first identification information from the base station, the terminal configures only the emergency information received from the network to which the terminal is communicatively connected as a notification target, based on the first identification information associated with the emergency information.

## Description

### Technical Field

An aspect of the present invention relates to a network system, a terminal, and a notification method. This application claims priority to JP 2022-156591 filed on September 29, 2022, the contents of which are incorporated herein by reference.

### Background Art

The 3GPP (trade name) defines standard technical specifications for providing a distribution base of emergency information called the Public Warning System (PWS). For example, the emergency information is distributed using the Earthquake and Tsunami Warning System (ETWS), the Commercial Mobile Alert System (CMAS), or the like as the PWS (for example, see NPL 1). For example, an earthquake or a tsunami is broadcast using a message ID designated in advance, and additionally, there is a range of message IDs (for example, "A000 to AFFF") that can be individually designated by a communication carrier (for example, see "9.4.1.2.2" of NPL 2). Since the emergency information (message ID) is repeatedly distributed multiple times in order to increase the probability of reaching terminals, the terminal detects a duplication of the message ID to ignore the same emergency information (message ID) for a certain time period (for example, one hour, 24 hours, or the like) (for example, see "8.2" of NPL 2). In recent years, technical requirements and system development have been made for a fifth generation mobile communication system (hereinafter referred to as "local 5G") which can be used by various entities such as local companies and municipalities by constructing a network in a spot manner in their buildings and sites.

### Citation List

### Non Patent Literature

NPL 1: 3GPP TS 22.268 v17.0.0 (2022-03)
NPL 2: 3GPP TS 23.041 v17.4.0 (2022-06)
NPL 3: Guidelines on local 5G introduction, [online], December 2019 (last revised March 2022), Ministry of Internal Affairs and Communications, Japan [retrieved on September 26, 2022], the Internet (https://www.soumu.go.jp/main_content/000804382.pdf)

### Summary of Invention

### Technical Problem

At present, the communication carriers basically distribute the emergency information using the PWS system. However, in a case that the PWS will be operated in a self-managed network of the local 5G or the like in the future, the range of the message IDs that can be individually designated by the communication carriers (for example, "A000 to AFFF") may be freely used by respective self-managed networks. In this case, a terminal may first receive a message ID from a nearby network different from a network for the terminal itself (hereinafter referred to as "own network") and then receives the same message ID from the own network. For example, in a case of privately operating the local 5G, a Public Land Mobile Network (PLMN) of each self-managed network, which uses "999-002" (see NPL 3, p. 19), can receive a message ID of another network, and thus the message ID cannot be distinguished. Therefore, the terminal may erroneously display the emergency information from the other network, or detect a duplication and ignore the emergency information to be originally displayed from the own network.

An aspect of the present invention has been made in view of the problems described above, and has an object to provide a network system, a terminal, and a notification method that enable the terminal to appropriately make a notification of emergency information from the own network in a case that the emergency information is distributed in multiple networks.

### Solution to Problem

In order to solve the above problems, an aspect of the present invention is a network system including base stations in multiple respective networks, and a terminal capable of communicative connection to any one of the multiple networks via radio communication. First identification information capable of identifying each of the multiple networks is configured in advance. A base station of the base stations transmits emergency information to the terminal existing in a radio communication service area of the base station to allow the emergency information to be received by the terminal regardless of whether the terminal is communicatively connected to the base station, the emergency information being associated with the first identification information configured for a network of the multiple networks to which the base station is communicatively connected. The terminal includes a receiver configured to receive the emergency information associated with the first identification information from the base station, and a controller configured to configure, in a case that the receiver receives the emergency information, only the emergency information received from the network to which the terminal is communicatively connected as a notification target, based on the first identification information associated with the emergency information.

An aspect of the present invention is a terminal capable of communicative connection to any one of base stations in multiple respective networks via radio communication, first identification information capable of identifying each of the multiple networks being configured in advance, the terminal including a receiver configured to receive emergency information associated with the first identification information from a base station of the base stations in a case that the terminal exists in a radio communication service area of the base station regardless of whether the terminal is communicatively connected to the base station, and a controller configured to configure, in a case that the receiver receives the emergency information, only the emergency information received from a network of the multiple networks to which the terminal is communicatively connected as a notification target, based on the first identification information associated with the emergency information.

An aspect of the present invention is a notification method of emergency information in a network system, the network system including base stations in multiple respective networks, and a terminal capable of communicative connection to any one of the multiple networks via radio communication, first identification information capable of identifying each of the multiple networks being configured in advance, the notification method including the steps of transmitting, by a base station of the base stations, emergency information to the terminal existing in a radio communication service area of the base station to allow the emergency information to be received by the terminal regardless of whether the terminal is communicatively connected to the base station, the emergency information being associated with the first identification information configured for a network of the multiple networks to which the base station is communicatively connected, receiving, by the terminal, the emergency information associated with the first identification information from the base station, and configuring, by the terminal and in a case that the emergency information is received, only the emergency information received from the network to which the terminal is communicatively connected as a notification target, based on the first identification information associated with the emergency information.

An aspect of the present invention is a notification method of emergency information in a terminal, the terminal capable of communicative connection to any one of base stations in multiple respective networks via radio communication, first identification information capable of identifying each of the multiple networks being configured in advance, the notification method including the steps of receiving, by the terminal, emergency information associated with the first identification information from a base station of the base stations in a case that the terminal exists in a radio communication service area of the base station regardless of whether the terminal is communicatively connected to the base station, and configuring, by the terminal, in a case that the emergency information is received, only the emergency information received from a network of the multiple networks to which the terminal is communicatively connected as a notification target, based on the first identification information associated with the emergency information.

### Advantageous Effects of Invention

According to the above aspect of the present invention, it is possible to enable a terminal to appropriately make a notification of emergency information from the own network in a case that the emergency information is distributed in multiple networks.

### Brief Description of Drawings

FIG. 1 is a diagram illustrating an example of a schematic configuration of a network system according to a first embodiment.
FIG. 2 is a diagram illustrating an overview of processing in a case that a terminal receives emergency information from multiple self-managed networks according to the first embodiment.
FIG. 3 is a block diagram illustrating an example of a schematic configuration of a self-managed network according to the first embodiment.
FIG. 4 is a block diagram illustrating an example of a schematic configuration of the terminal apparatus according to the first embodiment.
FIG. 5 is a flowchart illustrating an example of a notification process of the emergency information according to the first embodiment.
FIG. 6 is a flowchart illustrating an example of a notification process of emergency information according to a second embodiment.
FIG. 7 is a diagram illustrating an example of priorities of the emergency information configured in a self-managed network according to a third embodiment.
FIG. 8 is a flowchart illustrating an example of a notification process of emergency information according to the third embodiment.

### Description of Embodiments

Hereinafter, embodiments of the present invention will be described with reference to the drawings.

### First Embodiment

### Overview

First, an overview of a network system according to a first embodiment will be described.

System development of the local 5G (the fifth generation mobile communication system) has been made as a communication system that can be used by various entities according to regional needs and individual needs, and various entities other than communication carriers can construct self-managed networks in their buildings and sites by using this local 5G or the like. Although at present, only the communication carriers basically distribute the emergency information using the Public Warning System (PWS) system, the emergency information or the like will be distributed using the PWS even in the self-managed network of the local 5G or the like in the future.

In a case that the PWS is used in the self-managed network, private emergency information may be needed to be preferentially broadcast in addition to an earthquake and a tsunami. Examples of conceivable private emergency information include fire, gas leakage, radiation leakage, flood, underground flood, river flood, avalanche, eruption, and suspicious person information, for example. In the self-managed network, a case is assumed that the PWS is used to broadcast a private message which is relatively not emergent. For example, a case is also assumed that the PWS is used for a message to an employee, sharing of lost child information to clerks, notification of traffic information such as train delay or congestion, notification of weather information such as heat stroke warning or heavy rain warning, and the like.

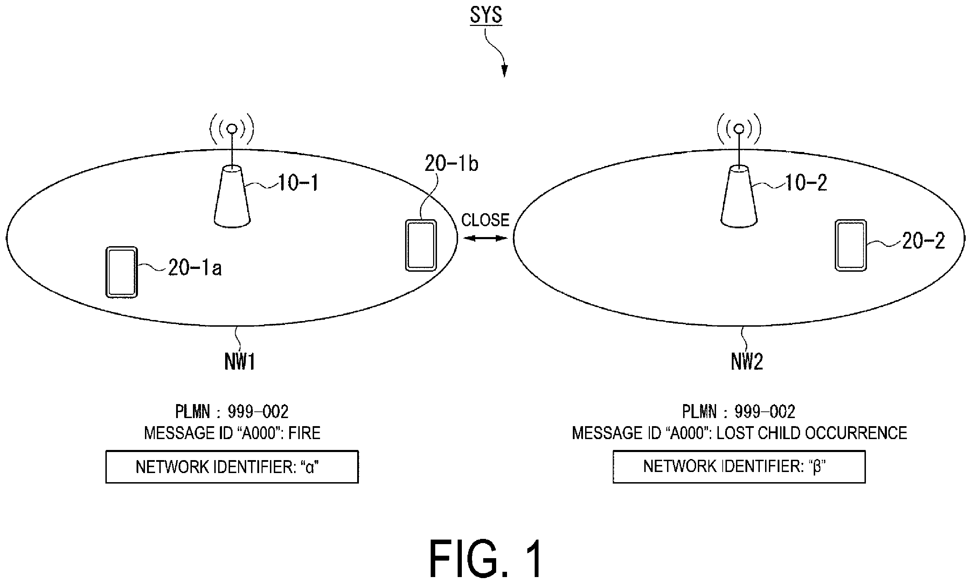

FIG. 1 is a diagram illustrating an example of a schematic configuration of a network system according to the present embodiment. A network system SYS according to the present embodiment includes a base station 10 in each of multiple self-managed networks NW and a terminal 20 capable of communicative connection to any one of the multiple self-managed networks NW via radio communication. In this figure, two self-managed networks NW, i.e., a self-managed network NW1 and a self-managed network NW2 are illustrated, but three or more self-managed networks NW may exist. In the illustrated example, the base station 10 in the self-managed network NW1 is denoted as a base station 10-1 and the base station 10 in the self-managed network NW2 is denoted as a base station 10-2. The terminals 20 communicatively connected to the base station 10-1 in the self-managed network NW2 are denoted as terminals 20-1a and 20-1b, and the terminal 20 communicatively connected to the base station 10-2 in the self-managed network NW2 is denoted as a terminal 20-2.

Here, a configuration example is described in which broadcast distribution of emergency information is performed using an Earthquake and Tsunami Warning System (ETWS) as the PWS in the self-managed network NW using the local 5G. The emergency information contains contents each of which is associated with a message ID, and is broadcast using the message ID designated for each content. In a case that the self-managed network NW is operated in the local 5G, a range of the message IDs (for example, "A000 to AFFF") that can be individually designated by carriers operating respective self-managed networks NW is determined (3GPP TS 23.041 9.4.1.2.2). Therefore, in a case that the carriers operating the respective self-managed networks NW individually use the range of "A000 to AFFF", even the same message ID may indicate pieces of emergency information deferent between the respective self-managed networks NW. For example, although the message ID "A000" is designated as "fire" in the self-managed network NW1, the same message ID "A000" may be designated as "missing child occurrence" in the self-managed network NW2.

In a case of privately operating the self-managed network NW in the local 5G, the respective self-managed networks NW use the same Public Land Mobile Network (PLMN) (for example, "999-002"). Therefore, the messages ID of the respective self-managed networks NW cannot be distinguished from the PLMN. As described above, the same message ID may indicate emergency information different between the self-managed network NW1 and the self-managed network NW2. Therefore, in the present embodiment, a network identifier is configured as identification information for identifying each self-managed network NW so that from which self-managed network NW the message ID can be distinguished. In a case of the emergency information is distributed from each self-managed network NW, the emergency information (message ID) associated with the network identifier is distributed.

The network identifier may be an identifier for identifying the base station 10 in each self-managed network NW or an identifier for identifying the core network. Here, the description is given assuming that the network identifier configure for the self-managed network NW1 is "α" and the network identifier configured for the self-managed network NW2 is "β".

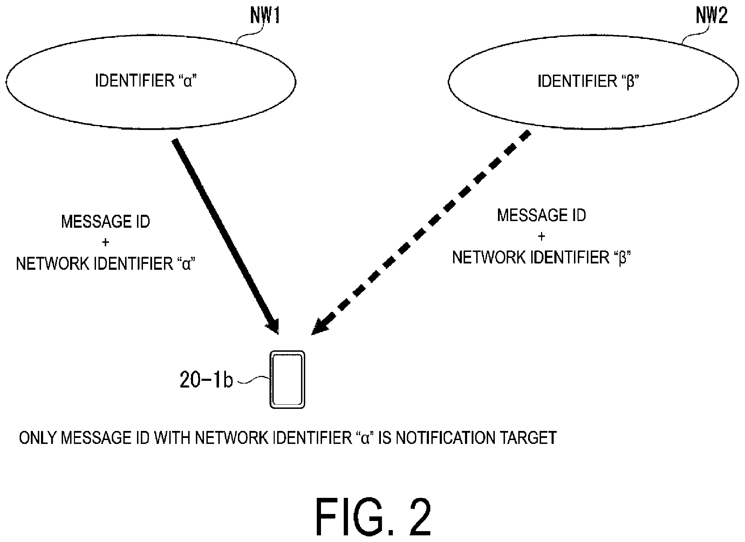

The emergency information distributed from each self-managed network NW is distributed to the terminal 20 existing in a communication service area of each self-managed network NW to allow the emergency information to be received by the terminal 20 regardless of whether the terminal 20 is communicatively connected to each self-managed network NW. In the local 5G, even though area adjustment or interference adjustment is performed at the time of installation, as illustrated in FIG. 1, for example, since the terminal 20-1b communicatively connected to the base stations 10-1 in the self-managed network NW1 is located near the self-managed network NW2, the terminals 20-1b may receive not only the emergency information distributed from the self-managed network NW1 but also the emergency information distributed from the self-managed network NW2. Processing in the terminals 20-1b at this time is described with reference to FIG. 2.

FIG. 2 is a diagram illustrating an overview of processing in a case that the terminal receives the emergency information from the multiple self-managed networks according to the present embodiment. The emergency information (message ID) distributed from the self-managed network NW1 is associated with the network identifier "α". On the other hand, the emergency information (message ID) distributed from the self-managed network NW2 is associated with the network identifier "β".

The terminal 20-1b, in a case of receiving the emergency information (message ID) distributed from the self-managed network NW1, configures the received emergency information (message ID) as a notification target because the received emergency information is associated with the network identifier "α" of the self-managed network NW1 to which the terminal 20-1b is communicatively connected.

The terminal 20-1b, in a case of receiving the emergency information (message ID) distributed from the self-managed network NW2, does not configure the received emergency information (message ID) as a notification target because the received emergency information is associated with the network identifier "β" of the self-managed network NW2 that is other than the self-managed network NW1 to which the terminal 20-1b is communicatively connected. For example, the terminal 20-1b, in a case of receiving the emergency information (message ID) associated with the network identifier "β" of the other self-managed network NW2, discards the received emergency information (message ID).

That is, the terminal 20-1b, in the case of receiving the emergency information (message ID), checks which self-managed network NW distributes the emergency information based on the network identifier, and configures only the emergency information (message ID) received from the self-managed network NW to which the terminal 20-1b is connected as a notification target. For example, the terminal 20-1b, in a case of receiving the emergency information (message ID) from the self-managed network NW to which the terminal 20-1b is connected, displays information for making a notification of the emergency information (for example, occurrence of an earthquake) based on the message ID or outputs a notification sound.

As a result, in the network system SYS according to the present embodiment, in a case that the emergency information is distributed in the multiple self-managed networks NW, the terminal 20 can appropriately display only the emergency information from the self-managed network NW to which the terminal 20 is communicatively connected. The configuration and processing of the network system SYS according to the present embodiment will be described in detail below.

### Configuration of Self-Managed Network

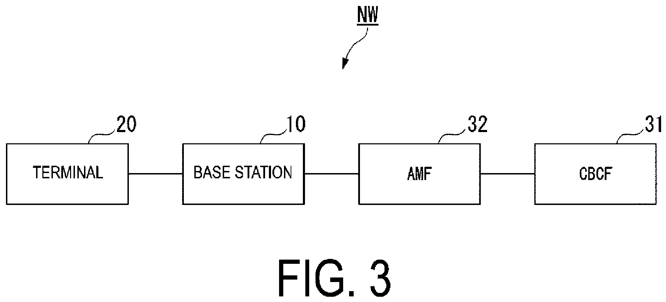

FIG. 3 is a block diagram illustrating an example of a schematic configuration of the self-managed network according to the present embodiment. For example, each of the self-managed networks NW independently includes a Cell Broadcast Centre Function (CBCF) 31, an Access and Mobility Management Function (AMF) 32, and the base station 10, and is configured to be able to communicate with the terminal 20.

The CBCF 31 receives emergency information from a Cell Broadcast Entity (CBE) that is an information distribution source such as the Meteorological Agency. For example, the CBCF 31 receives information on an earthquake, a tsunami, and the like from the Meteorological Agency. The CBCF 31 receives information such as fire, gas leakage, radiation leakage, flood, underground flood, river flood, avalanche, eruption, and suspicious person information not only from the Meteorological Agency but also from sensors and the like installed in or near each self-managed network and a self-managed CBE using the sensors and the like. Furthermore, the CBCF 31 receives private information such as a message to an employee and lost child information from a carrier (company, facility, store, or the like) that operates each self-managed network.

The CBCF 31 broadcasts the received emergency information using the designated message ID. For example, in each self-managed network NW, multiple message IDs each of which is associable with each of contents of the emergency information are defined using a range of message IDs (for example, "A000 to AFFF") that can be individually designated by the carriers. As described above, for example, "fire" is associated with the message ID "A000" in the self-managed network NW1, but "lost child occurrence" is associated with the message ID in the self-managed network NW2. That is, the message ID "A000" indicates "fire" in the self-managed network NW1, but indicates "lost child occurrence" in the self-managed network NW2.

For example, the CBCF 31 transmits the message ID associated with the network identifier configured for the self-managed network NW of the CBCF 31 to the AMF 32. The message ID is included in a system information block (SIB) for broadcasting the emergency information. For example, in the ETWS, the message ID is included in the SIB 6, the SIB 7, or the like. The network identifier is also assigned to, for example, the SIB 6 or the SIB 7. That is, the network identifier is included in, for example, a system information block.

The AMF 32 is a Network Function (NF) having a function such as mobility management, and is communicatively connected to the CBCF 31 and the base stations 10. Note that in a case that the multiple base stations 10 are provided in one self-managed network NW, the AMF 32 is communicatively connected to the multiple base stations 10.

The base station 10 is a Radio Access Network (RAN) node having a radio access function, and is capable of communication connection to the multiple terminals 20. For example, the base station 10 receives the message ID and the network identifier transmitted from the CBCF 31 via the AMF 32 and transmits them to the terminal 20. Note that the base station 10 transmits the message ID associated with the network identifier configured for the self-managed network NW to which the base station 10 is communicatively connected to the terminal 20 existing in a (radio) communication service area of the base station 10 to allow the emergency information to be received by the terminal 20 regardless of whether the terminal 20 is communicatively connected to the base station. The base station 10 repeatedly distributes the message ID multiple times in order to increase the probability of reaching the terminal 20.

The terminal 20 is communicatively connected to the base station 10. For example, the terminals 20 receives the emergency information associated with the message ID and the network identifier, distributed from the CBCF 31, from the base stations 10 via the AMF 32 and the base stations 10. Note that the terminal 20 not only receives the emergency information from the base station 10 to which the terminal 20 is communicatively connected, but also receives the emergency information from a base station 10 in another self-managed network NW to which the terminal 20 is not communicatively connected in a case that the terminal 20 is within a communication service area of the latter base station 10.

### Configuration of Terminal

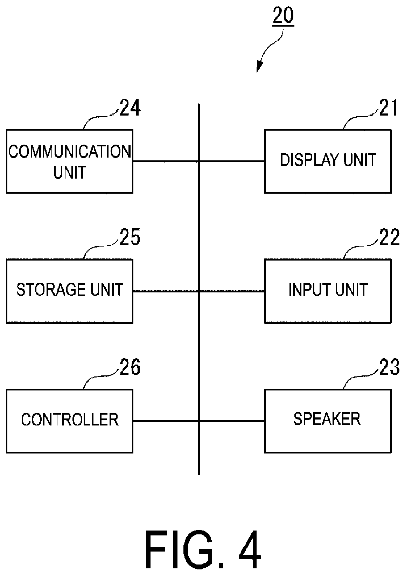

FIG. 4 is a block diagram illustrating an example of a schematic configuration of the terminal according to the present embodiment. The terminal 20 is an information processing apparatus used by a user and is, for example, a mobile terminal such as a smartphone, a tablet personal computer (PC), or a notebook PC. The terminal 20 includes a display unit 21, an input unit 22, a speaker 23, a communication unit 24, a storage unit 25, and a controller 26.

For example, the display unit 21 is configured to include a Liquid Crystal Display (LCD), an organic Electro Luminescence (EL) display, or the like. For example, the display unit 21 displays display data generated based on program processing performed under the control of the controller 26. The display unit 21 displays information based on the emergency information received from the self-managed network NW under the control of the controller 26.

The input unit 22 is an input device that receives a user operation. For example, the input unit 22 is integrated with the display unit 21 as a touch panel that receives a touch operation on a display screen of the display unit 21. The input unit 22 outputs an operation signal based on the received operation to the controller 26.

The speaker 23 outputs audio data generated based on program processing performed under the control of the controller 26. The speaker 23 outputs a broadcast sound based on the emergency information received from the self-managed network NW under the control of the controller 26.

The communication unit 24 is configured to include a communication device that controls radio communication. For example, the communication unit 24 functions as a receiver that receives various types of information transmitted from the base station 10 by communicatively connecting to the base station 10. The communication unit 24 functions as a transmitter transmits various types of information to the base station 10 by communicatively connecting to the base station 10.

Note that the communication unit 24 can receive the emergency information transmitted from the base station 10 as long as the communication unit 24 is within the communication service area of the base station 10 regardless of whether the communication unit 24 is communicatively connected to the base station 10. For example, the communication unit 24 receives the emergency information (message ID) associated with the network identifier from the base station 10 to which the communication unit 24 is communicatively connected, or the base station 10 to which the communication unit 24 is communicatively connected but of which the communication service area the communication unit 24 is within. The communication unit 24 transmits the received emergency information (message ID) and network identifier to the controller 26.

The storage unit 25 is configured to include a Random Access Memory (RAM) and a Read Only Memory (ROM), a flash ROM, and the like. For example, the storage unit 25 stores an Operating System (OS), various programs such as applications, and various types of data acquired by operations of the programs. The storage unit 25 may be configured to include a Hard Disk Drive (HDD), a Solid State Drive (SSD), or the like.

The controller 26, which is configured to include a processor such as a Central Processing Unit (CPU), executes a program stored in the storage unit 25 to control each unit included in the terminal 20 and perform various processing.

For example, in a case that the communication unit 24 receives the emergency information from the base station 10, the controller 26 configures only the emergency information received from the self-managed network NW to which the terminal 20 is communicatively connected as a notification target, based on the network identifier associated with the emergency information.

Specifically, the controller 26 acquires the network identifier of the self-managed network NW to which the communication unit 24 is communicatively connected at the time of or during the communicative connection, and stores and holds the acquired network identifier in the storage unit 25. In the case that the communication unit 24 receives the emergency information (message ID), the controller 26 checks the network identifier associated with the message ID against the held network identifier of the self-managed network NW to determine whether or not the message ID is received from the self-managed network NW to which the terminal 20 is communicatively connected. For example, in a case that the controller 26 determines that the message ID is received from the self-managed network NW to which the terminal 20 is communicatively connected based on the network identifier associated with the message ID, the controller 26 configures the emergency information based on the received message ID as the notification target.

On the other hand, in a case of receiving a message ID from another self-managed network NW different from the self-managed network NW to which the terminal 20 is communicatively connected, the controller 26 excludes the emergency information based on the received message ID from the notification target. For example, in the case of receiving a message ID from another self-managed network NW different from the self-managed network NW to which the terminal 20 is communicatively connected, the controller 26 excludes the emergency information from the notification target by discarding the message ID.

The controller 26 excludes the same emergency information (message ID) from the notification target for a certain time period even if the message ID is transmitted from the self-managed network NW to which the terminal 20 is communicatively connected by detecting a duplication of the message ID. For example, for a certain time period after making a notification of the emergency information based on the message ID received from the self-managed network NW to which the terminal 20 is communicatively connected, the controller 26, even in a case of receiving the same message ID from the self-managed network NW, detects a duplication of the message ID and excludes the message ID from the notification target.

Note that in the case of receiving a message ID from another self-managed network NW different from the self-managed network NW to which the terminal 20 is communicatively connected, the controller 26 excludes the emergency information from the notification target by, for example, discarding the received message ID, and therefore, after that, the controller 26 does not detect a duplication of the message ID as even in the case of receiving the message ID from the self-managed network NW to which the terminal 20 is communicatively connected. That is, in a case of receiving a message ID from the self-managed network NW to which the terminal 20 is communicatively connected regardless of the elapsed time thereafter, the controller 26 configures the received message ID as a notification target even in a case that the received message ID is the same as a message ID received over another self-managed network NW.

The controller 26 notifies the user of the emergency information by causing the display unit 21 to display information based on the emergency information as the notification target or causing the speaker 23 to output the broadcast sound based on the emergency information. For example, in a case that the terminal 20-1b illustrated in FIGS. 1 and 2 receives the message ID "A000" from the self-managed network NW1 (base station 10-1), the terminal 20-1b makes a notification of (for example, displays) the emergency information related to "fire" based on the received message ID. On the other hand, even in a case that the terminal 20-1b receives the message ID "A000" from the self-managed network NW2 (base station 10-2), the terminal 20-1b discards the received message to exclude the message from the notification target.

### Notification Process on Emergency Information

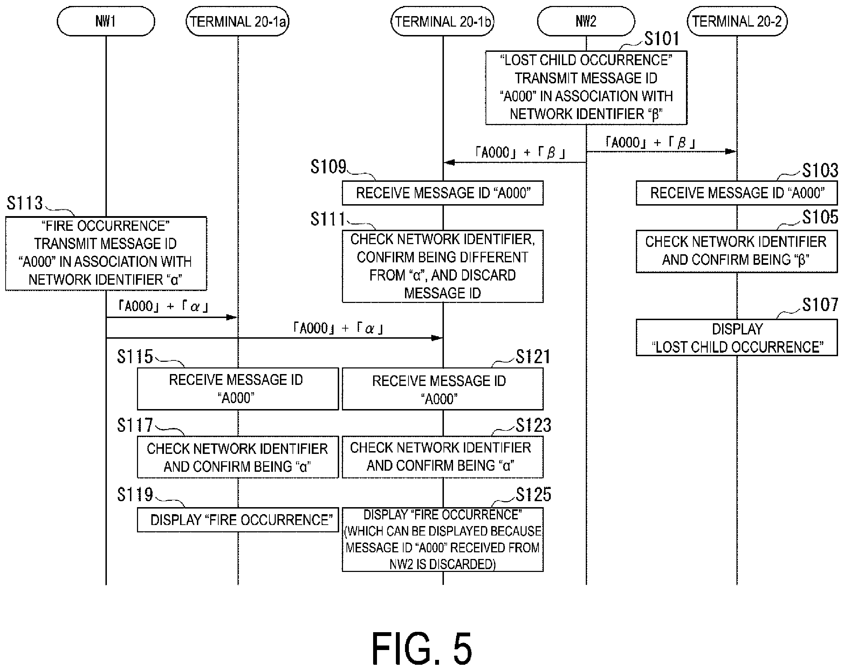

Next, an operation of notification process on emergency information in the network system SYS is described with reference to FIG. 5. FIG. 5 is a flowchart illustrating an example of the notification process on the emergency information according to the present embodiment. Here, the network system SYS illustrated in FIG. 1 is described as an example. As illustrated in FIG. 1, the terminals 20-1a and 20-1b are communicatively connected to the self-managed network NW1 (base stations 10-1). The terminal 20-2 is communicatively connected to the self-managed network NW2 (base station 10-2). Since the terminals 20-1b are near the self-managed network NW2, the terminals 20-1b may also receive the emergency information from the self-managed network NW2.

(Step S101) In a case of lost child occurrence, the self-managed network NW2 broadcasts emergency information indicating a lost child occurrence. To be more specific, the self-managed network NW2 transmits the message ID "A000" indicating a lost child occurrence associated with the network identifier "β".

(Step S103) The terminal 20-2 receives the emergency information (message ID "A000") associated with the network identifier "β" from the self-managed network NW2.

(Step S105) The terminal 20-2 checks the network identifier associated with the received emergency information (message ID "A000") and confirms that the network identifier is "β" which is the same as the network identifier of the self-managed network NW2 to which the terminal 20-2 is communicatively connected. The terminal 20-2 configures the received emergency information (message ID "A000") as a notification target, and the process proceeds to step S107.

(Step S107) The terminal 20-2 displays "lost child occurrence" on the display unit 21 as the emergency information based on the message ID "A000" by application program processing.

(Step S109) In a case that the emergency information broadcast from the self-managed network NW2 in step S101 reaches the terminal 20-1b due to leaked radio waves or the like, the terminal 20-1b receives the emergency information (message ID "A000") associated with the network identifier "β" from the self-managed network NW2.

(Step S111) The terminal 20-1b checks the network identifier associated with the received emergency information (message ID "A000"), and confirms that the network identifier is different from the network identifier "α" of the self-managed network NW1 to which the terminal 20-1b is communicatively connected. The terminal 20-1b excludes the received emergency information (message ID "A000") from the notification target by discarding the emergency information.

(Step S113) In a case that a fire occurs, the self-managed network NW1 broadcasts emergency information indicating a fire. To be more specific, the self-managed network NW1 transmits the message ID "A000" indicating a fire associated with the network identifier "α".

(Step S115) The terminal 20-1a receives the emergency information (message ID "A000") associated with the network identifier "α" from the self-managed network NW1.

(Step S117) The terminal 20-1a checks the network identifier associated with the received emergency information (message ID "A000"), and confirms that the network identifier is "α" which is the same as the network identifier of the self-managed network NW1 to which the terminal 20-1a is communicatively connected. The terminal 20-1a configures the received emergency information (message ID "A000") as a notification target, and the process proceeds to step S119.

(Step S119) The terminal 20-1a displays "fire occurrence" on the display unit 21 as the emergency information based on the message ID "A000" by application program processing.

(Step S121) The terminal 20-1b receives the emergency information (message ID "A000") associated with the network identifier "α" from the self-managed network NW1, similarly to the terminal 20-1a.

(Step S123) The terminal 20-1a checks the network identifier associated with the received emergency information (message ID "A000"), and confirms that the network identifier is "α" which is the same as the network identifier of the self-managed network NW1 to which the terminal 20-1b is communicatively connected. The terminal 20-1b configures the received emergency information (message ID "A000") as a notification target, and the process proceeds to step S125.

(Step S125) The terminal 20-1b displays "fire occurrence" on the display unit 21 as the emergency information based on the message ID "A000" by application program processing. Note that although the terminal 20-1b has already received the same message ID "A000" in step S109, the message ID is discarded in step S111 and thus a duplication of the message ID is not detected and the displaying can be made.

As described above, the network system SYS according to the present embodiment includes each of the respective base stations 10 in the multiple self-managed networks NW (an example of the network) and the terminal 20 capable of communicative connection to any one of the multiple self-managed networks NW via radio communication, wherein the network identifier (an example of the first identification information) capable of identifying each of the multiple self-managed networks NW is configured in advance. The base station 10 transmits the emergency information associated with the network identifier configured for the self-managed network NW to which the base station 10 is communicatively connected to the terminal 20 existing in the radio communication service area of the base station 10 to allow the emergency information to be received by the terminal 20 regardless of whether the terminal 20 is communicatively connected to the base station. The terminal 20 receives the emergency information associated with the network identifier from the base station 10. The terminal 20, in the case of receiving the emergency information, configures only the emergency information received from the self-managed network NW to which the terminal 20 is communicatively connected as a notification target, based on the network identifier associated with the received emergency information.

As a result, in the case that the emergency information is distributed in the multiple self-managed networks NW, the network system SYS can make a notification of only the emergency information from the self-managed network (own network) to which the terminal 20 is communicatively connected based on the network identifier associated with the emergency information. Therefore, the network system SYS can appropriately make a notification of the emergency information from the self-managed network (own network) to which the terminal 20 is communicatively connected.

For example, multiple message IDs (an example of second identification information) are defined each of which is associable with each of contents of the emergency information, and the multiple message IDs are associated with the respective contents of the emergency information in advance for each of the multiple self-managed networks NWs. The base station 10 transmits information including the message ID as the emergency information. The terminal 20, in the case of receiving the message ID, configures only the emergency information based on the message ID received from the self-managed network NW to which the terminal 20 is communicatively connected as a notification target, based on the network identifier associated with the message ID.

As a result, in the case that the emergency information is distributed by using the message ID defined for each of the contents of the emergency information for each of the multiple self-managed networks NW, the network system SYS can make a notification of only the emergency information from the self-managed network (own network) to which the terminal 20 is communicatively connected based on the network identifier associated with the message ID. Therefore, the network system SYS can appropriately make a notification of the emergency information from the self-managed network (own network) to which the terminal 20 is communicatively connected.

For a certain time period after making a notification of the emergency information based on the message ID received from the self-managed network NW to which the terminal 20 is communicatively connected, the terminal 20, even in the case of receiving the same message ID from the self-managed network NW to which the terminal 20 is communicatively connected, excludes the emergency information from the notification target.

As a result, even in the case that the network system SYS receives the same emergency information multiple times for a certain time period from the self-managed network NW to which the terminal 20 is communicatively connected, the network system SYS detects no duplication and makes no notification of the emergency information each time. Therefore, the network system SYS can appropriately make a notification of the emergency information from the self-managed network (own network) to which the terminal 20 is communicatively connected.

The terminal 20 excludes the emergency information based on the message ID from the notification target in the case of receiving the message ID from another self-managed network NW different from the self-managed network NW to which the terminal 20 is communicatively connected, and regardless of the elapsed time thereafter, configures the emergency information based on the received message ID as a notification target even in the case that the received message ID is the same as a message ID received over the other self-managed network NW, in the case of receiving the message ID from the self-managed network NW to which the terminal 20 is communicatively connected.

Accordingly, the network system SYS does not erroneously make a notification of the emergency information from another self-managed network NW to which the terminal 20 is not communicatively connected, and does not erroneously exclude, from the notification target, the emergency information from the self-managed network NW to which the terminal 20 is communicatively connected by detecting a duplication of the emergency information. Therefore, the network system SYS can appropriately make a notification of the emergency information from the self-managed network (own network) to which the terminal 20 is communicatively connected.

For example, in the case of receiving the message ID from another self-managed network NW different from the self-managed network NW to which the terminal 20 is communicatively connected, the terminal 20 excludes the emergency information based on the message ID from the notification target by discarding the message ID.

Accordingly, the network system SYS can avoid erroneously making a notification of the emergency information from another self-managed network NW to which the terminal 20 is not communicatively connected.

For example, the network identifier is identification information of the base station 10 included in each of the multiple self-managed networks NW.

Accordingly, the network system SYS can identify the self-managed network NW that is the distribution source of the emergency information using the identification information of the base station 10.

For example, the network identifier may be identification information of a core network included in each of the multiple self-managed networks NW. The core network is a communication network of a core portion of the self-managed network NW, and includes, for example, the AMF 32 and the CBCF 31.

Accordingly, the network system SYS can identify the self-managed network NW that is the distribution source of the emergency information using the identification information of the core network.

The network identifier is included in the system information block (SIB) for broadcasting the emergency information.

Accordingly, in a case that the self-managed network NW distributes the emergency information, the network system SYS can transmit the emergency information associated with the identification information of the distribution source using the system information block. Therefore, the terminal 20 that has received the emergency information can identify the self-managed network NW that is the distribution source of the received emergency information.

The notification method of emergency information in the network system SYS according to the present embodiment includes a step of transmitting, by the base station 10, emergency information to the terminal 20 existing in the radio communication service area of the base station 10 to allow the emergency information to be received by the terminal 20 regardless of whether the terminal 20 is communicatively connected to the base station 10, the emergency information being associated with the network identifier (an example of the first identification information) configured for the self-managed network NW (an example of the network) to which the base station 10 is communicatively connected, a step of receiving, by the terminal 20, the emergency information associated with the network identifier from the base station 10, and a step of configuring, by the terminal 20 and in a case that the emergency information is received, only the emergency information received from the self-managed network NW to which the terminal 20 is communicatively connected as a notification target, based on the network identifier associated with the emergency information.

As a result, in the case that the emergency information is distributed in the multiple self-managed networks NW, the network system SYS can make a notification of only the emergency information from the self-managed network (own network) to which the terminal 20 is communicatively connected based on the network identifier associated with the emergency information. Therefore, the network system SYS can appropriately make a notification of the emergency information from the self-managed network (own network) to which the terminal 20 is communicatively connected.

The terminal 20 according to the present embodiment is capable of communicative connection to any one of the respective base stations 10 in the multiple self-managed networks NW (each an example of the network) via radio communication. The network identifier (an example of first identification information) capable of identifying each of the multiple self-managed networks NW is configured in advance. The terminal 20 receives the emergency information associated with the network identifier from the base station 10 in a case that the terminal 20 exists in the radio communication service area of the base station 10 regardless of whether the terminal 20 is communicatively connected to the base station 10. The terminal 20, in the case of receiving the emergency information, configures only the emergency information received from the self-managed network NW to which the terminal 20 is communicatively connected as a notification target, based on the network identifier associated with the emergency information.

As a result, in the case that the emergency information is distributed in the multiple self-managed networks NW, the terminal 20 can make a notification of only the emergency information from the self-managed network (own network) to which the terminal 20 is communicatively connected based on the network identifier associated with the emergency information. Therefore, the terminal 20 can appropriately make a notification of the emergency information from the self-managed network (own network) to which the terminal 20 is communicatively connected.

The notification method of emergency information in the terminal 20 according to the present embodiment includes a step of receiving, by the terminal 20, emergency information associated with the network identifier (an example of the first identification information) from the base station 10 in a case that the terminal 20 exists in the radio communication service area of the base station 10 regardless of whether the terminal 20 is communicatively connected to the base station 10, and a step of configuring, by the terminal 20 and in a case that the emergency information is received, only the emergency information received from the self-managed network NW to which the terminal 20 is communicatively connected as a notification target, based on the network identifier associated with the emergency information.

As a result, in the case that the emergency information is distributed in the multiple self-managed networks NW, the terminal 20 can make a notification of only the emergency information from the self-managed network (own network) to which the terminal 20 is communicatively connected based on the network identifier associated with the emergency information. Therefore, the terminal 20 can appropriately make a notification of the emergency information from the self-managed network (own network) to which the terminal 20 is communicatively connected.

Note that in the present embodiment, the terminal 20 discards the emergency information (message ID) received from another self-managed network NW (for example, step S111 in FIG. 5), but the terminals 20 may exclude the emergency information from the communication target without discarding the emergency information. For example, the terminal 20 may not discard the emergency information (message ID) received from the other self-managed network NW and may not perform the displaying, the outputting the notification sound, or the like for the emergency information. The terminal 20 may display, without discarding, the emergency information (message ID) received from the other self-managed network NW as emergency information of a self-managed network NW other than the self-managed network NW to which the terminal 20 is communicatively connected. In a case that the terminal 20 detects a duplication of the emergency information (message ID) received from the self-managed network NW to which the terminal 20 is communicatively connected, the terminal 20 may detect a duplication of only the emergency information (message ID) received from the self-managed network NW by checking the network identifier without discarding the emergency information (message ID) received from the other self-managed network NW.

### Second Embodiment

Now, a second embodiment of the present invention will be described below.

The first embodiment describes the example in which the network identifier is assigned to the system information block (SIB) as the identification information for identifying each self-managed network NW. In the present embodiment, an example is described in which the identification information for identifying each self-managed network NW is stated in an ETWS Secondary Notification.

In the ETWS Secondary Notification in the SIB 7, a text can be set. In the self-managed network NW operated privately, since it is not realistic to edit the text each time, an ETWS Primary Notification in the SIB 6 having no text is assumed to be mainly used. Therefore, the CBCF 31 according to the present embodiment states the identification information for identifying each self-managed network NW in the text of the ETWS Secondary Notification to associate the message ID with the identification information of the network and transmit them. This makes it possible to distinguish from which self-managed network NW the message ID is transmitted. The base station 10 receives the message ID and the identification information of the network transmitted from the CBCF 31 via the AMF 32 and transmits them to the terminal 20.

The terminal 20, in the case of receiving the emergency information (message ID), can check which self-managed network NW distributes the emergency information by checking the text of the ETWS Secondary Notification, and configure only the emergency information (message ID) received from the self-managed network NW to which the terminal 20 is connected as a notification target. The terminal 20, in the case of receiving the emergency information having the same message ID, can correctly detecting a duplication by checking the text of the ETWS Secondary Notification.

Here, the identification information for identifying each self-managed network NW may be, for example, a network name or may be the network identifier for identifying the base station 10 or the core network as in the first embodiment. As the network name, for example, an Access Point Name (APN) or the like may be used, or the network name may be encrypted. Here, an example is described in which the network name is stated in the text of the ETWS Secondary Notification as the identification information for identifying each self-managed network NW.

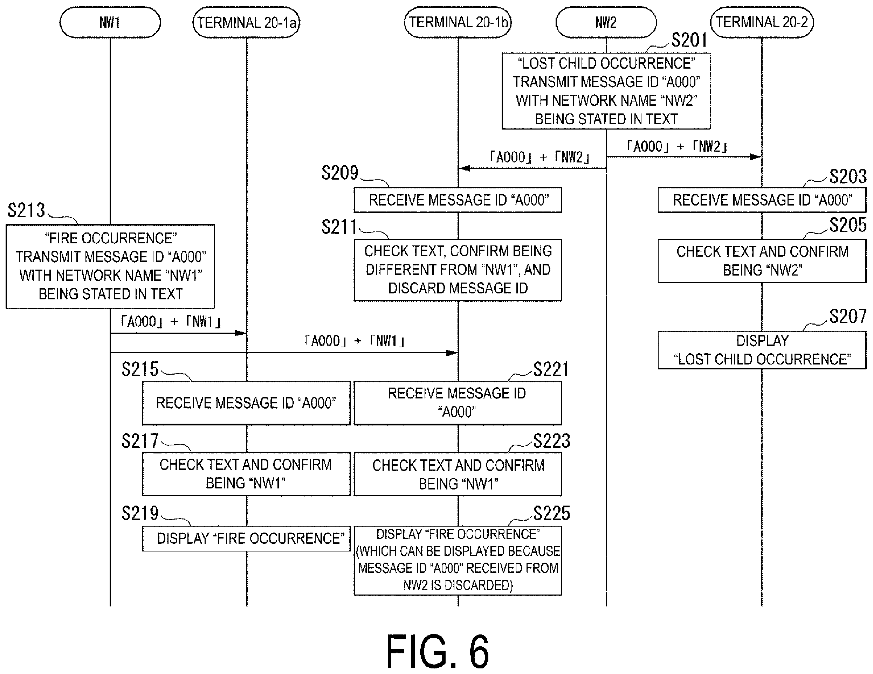

FIG. 6 is a flowchart illustrating an example of the notification process on the emergency information according to the present embodiment. Here, the network system SYS illustrated in FIG. 1 is described as an example, similarly to the notification process on the emergency information illustrated in FIG. 5, but is different in that the network name is used instead of the network identifier. Note that assume that the network name of the self-managed network NW1 is "NW1" and the network name of the self-managed network NW2 is "NW2".

(Step S201) In a case of lost child occurrence, the self-managed network NW2 broadcasts emergency information indicating a lost child occurrence. To be more specific, the self-managed network NW2 transmits the message ID "A000" indicating the lost child occurrence with the network name "NW2" being stated in the text of the ETWS Secondary Notification. That is, the self-managed network NW2 transmits the message ID "A000" indicating the lost child occurrence associated with the network name "NW2".

(Step S203) The terminal 20-2 receives the emergency information (message ID "A000") associated with the network name "NW2" from the self-managed network NW2.

(Step S205) The terminal 20-2 checks the text of the ETWS Secondary Notification, and confirms that the network name associated with the received emergency information (message ID "A000") is the network name "NW2" of the self-managed network NW2 to which the terminal 20-2 is communicatively connected. The terminal 20-2 configures the received emergency information (message ID "A000") as a notification target, and the process proceeds to step S207.

(Step S207) The terminal 20-2 displays "lost child occurrence" on the display unit 21 as the emergency information based on the message ID "A000" by application program processing.

(Step S209) In a case that the emergency information broadcast from the self-managed network NW2 in step S201 reaches the terminal 20-1b due to leaked radio waves or the like, the terminal 20-1b receives the emergency information (message ID "A000") associated with the network name "NW2" from the self-managed network NW2.

(Step S211) The terminal 20-1b checks the text of the ETWS Secondary Notification, and confirms that the network name associated with the received emergency information (message ID "A000") is different from the network name "NW1" of the self-managed network NW1 to which the terminal 20-1b is communicatively connected. The terminal 20-1b excludes the received emergency information (message ID "A000") from the notification target by discarding the emergency information.

(Step S213) In a case that a fire occurs, the self-managed network NW1 broadcasts emergency information indicating a fire. To be more specific, the self-managed network NW2 transmits the message ID "A000" indicating the fire with the network name "NW1" being stated in the text of the ETWS Secondary Notification. To be more specific, the self-managed network NW1 transmits the message ID "A000" indicating the fire associated with the network name "NW1".

(Step S215) The terminal 20-1a receives the emergency information (message ID "A000") associated with the network name "NW1" from the self-managed network NW1.

(Step S217) The terminal 20-1a checks the text of the ETWS Secondary Notification, and confirms that the network name associated with the received emergency information (message ID "A000") is "NW1" which is the same as the network name of the self-managed network NW1 to which the terminal 20-1a is communicatively connected. The terminal 20-1a configures the received emergency information (message ID "A000") as a notification target, and the process proceeds to step S219.

(Step S219) The terminal 20-1a displays "fire occurrence" on the display unit 21 as the emergency information based on the message ID "A000" by application program processing.

(Step S221) The terminal 20-1b receives the emergency information (message ID "A000") associated with the network name "NW1" from the self-managed network NW1, similarly to the terminal 20-1a.

(Step S223) The terminal 20-1b checks the text of the ETWS Secondary Notification, and confirms that the network name associated with the received emergency information (message ID "A000") is "NW1" which is the same as the network name of the self-managed network NW1 to which the terminal 20-1b is communicatively connected. The terminal 20-1b configures the received emergency information (message ID "A000") as a notification target, and the process proceeds to step S225.

(Step S225) The terminal 20-1b displays "fire occurrence" on the display unit 21 as the emergency information based on the message ID "A000" by application program processing. Note that although the terminal 20-1b has already received the same message ID "A000" in step S209, the message ID is discarded in step S211 and thus a duplication of the message ID is not detected and the displaying can be made.

As described above, in the present embodiment, the network identifier is included in the ETWS Secondary Notification.

Accordingly, in the case that the self-managed network NW distributes the emergency information, the network system SYS can transmit the emergency information associated with the identification information of the distribution source using the ETWS Secondary Notification. Therefore, the terminal 20 that has received the emergency information can identify the self-managed network NW that is the distribution source of the received emergency information.

Note that in the present embodiment, the terminal 20 discards the emergency information (message ID) received from another self-managed network NW (for example, step S211 in FIG. 6), but the terminals 20 may exclude the emergency information from the communication target without discarding the emergency information. For example, the terminal 20 may not discard the emergency information (message ID) received from the other self-managed network NW and may not perform the displaying, the outputting the notification sound, or the like for the emergency information. The terminal 20 may display, without discarding, the emergency information (message ID) received from the other self-managed network NW as emergency information of a self-managed network NW other than the self-managed network NW to which the terminal 20 is communicatively connected. In a case that the terminal 20 detects a duplication of the emergency information (message ID) received from the self-managed network NW to which the terminal 20 is communicatively connected, the terminal 20 may detect a duplication of only the emergency information (message ID) received from the self-managed network NW by checking the text of the ETWS Secondary Notification (for example, the network name) without discarding the emergency information (message ID) received from the other self-managed network NW.

### Third Embodiment

Now, a third embodiment of the present invention will be described below.

In the present embodiment, an example is described in which a priority is individually configured for each self-managed network NW for each piece of emergency information (message ID) and the priority is used to identify which self-managed network NW transmits the emergency information (message ID). The priority of the emergency information corresponds to an order in which a notification to the user is prioritized. For example, the priority "1" is the highest, and the priority decreases as the value increases to "2", "3", and the like.

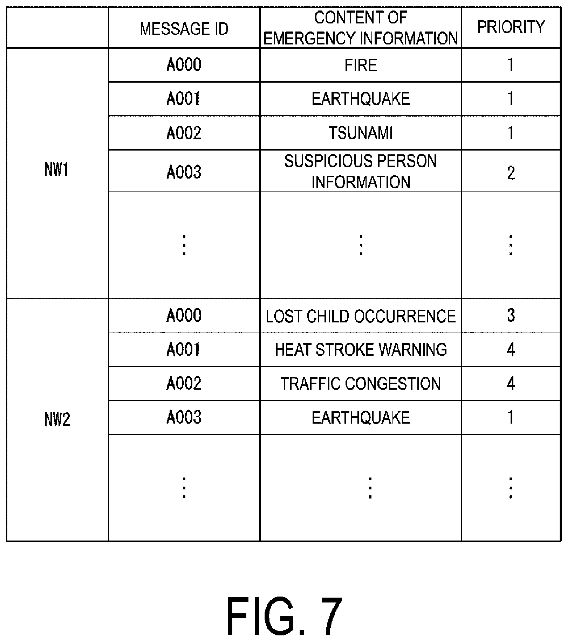

FIG. 7 is a diagram illustrating an example of the priorities of the emergency information configured in the self-managed network NW according to the present embodiment. In the illustrated example, in the self-managed network NW1, the priority of the message ID "A000" indicating a fire is set to "1", the priority of the message ID "A001" indicating an earthquake is set to "1", the priority of the message ID "A002" indicating a tsunami is set to "1", and the priority of the message ID "A003" indicating suspicious person information is set to "2". In the self-managed network NW2, the priority of the message ID "A000" indicating a lost child occurrence is set to "3", the priority of the message ID "A001" indicating a heat stroke warning is set to "4", the priority of the message ID "A002" indicating a traffic congestion is set to "4", and the priority of the message ID "A003" indicating an earthquake is set to "1".

As described above, since the association between the content of the emergency information and the message ID is individually configured for each self-managed network NW, there is a high possibility that the content and priority of the emergency information are different even in a case that the message ID is the same. Therefore, the terminal 20 can identify whether or not the message ID is transmitted from the self-managed network NW to which the terminal 20 is communicatively connected by checking the priority.

For example, for transmission of the emergency information (message ID), the CBCF 31 assigns the priority to the system information block (SIB) to transmit the message ID associated with the priority. Note that the CBCF 31 may assign the priority to the text of the ETWS Secondary Notification to transmit the message ID associated with the priority. The base station 10 receives the message ID and the priority transmitted from the CBCF 31 via the AMF 32 and transmits them to the terminal 20.

The terminal 20, in the case of receiving the message ID, uses the priority associated with the received messaged ID as the identification information of the self-managed network NW, and configures the emergency information based on the message ID as a notification target only in a case that the priority associated with the received message ID matches a priority configured in the self-managed network NW to which the terminal 20 is communicatively connected.

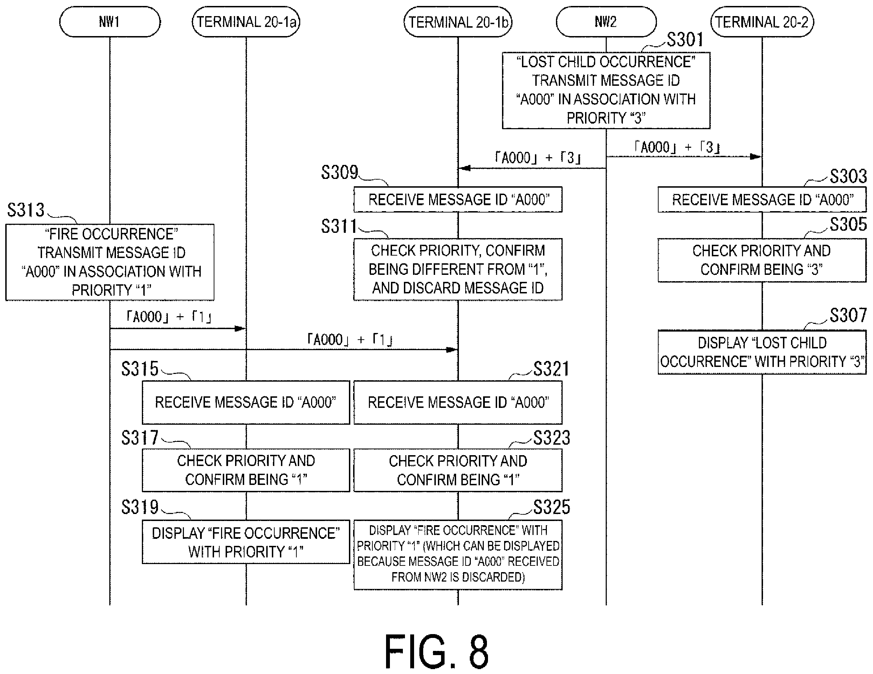

FIG. 8 is a flowchart illustrating an example of the notification process on the emergency information according to the present embodiment. Here, the network system SYS illustrated in FIG. 1 is described as an example, similarly to the notification process on the emergency information illustrated in FIGS. 5 and 6, but is different in that the priority is used instead of the network identifier.

(Step S301) In a case of lost child occurrence, the self-managed network NW2 broadcasts emergency information indicating a lost child occurrence. To be more specific, the self-managed network NW2 transmits the message ID "A000" indicating a lost child occurrence associated with the priority "3".

(Step S303) The terminal 20-2 receives the emergency information (message ID "A000") associated with the priority "3" from the self-managed network NW2.

(Step S305) The terminal 20-2 checks the priority associated with the received emergency information (message ID "A000") and confirms that the priority is "3" which is the same as the priority of the message ID "A000" in the self-managed network NW2 to which the terminal 20-2 is communicatively connected. The terminal 20-2 configures the received emergency information (message ID "A000") as a notification target, and the process proceeds to step S307.

(Step S307) The terminal 20-2 displays "lost child occurrence" with the priority "3" on the display unit 21 as the emergency information based on the message ID "A000" by application program processing.

(Step S309) In a case that the emergency information broadcast from the self-managed network NW2 in step S301 reaches the terminal 20-1b due to leaked radio waves or the like, the terminal 20-1b receives the emergency information (message ID "A000") associated with the priority "3" from the self-managed network NW2.

(Step S311) The terminal 20-1b checks the priority associated with the received emergency information (message ID "A000"), and confirms that the priority is different from the priority "1" of the message ID "A000" in the self-managed network NW1 to which the terminal 20-1b is communicatively connected. The terminal 20-1b excludes the received emergency information (message ID "A000") from the notification target by discarding the emergency information.

(Step S313) In a case that a fire occurs, the self-managed network NW1 broadcasts emergency information indicating a fire. To be more specific, the self-managed network NW1 transmits the message ID "A000" indicating a fire associated with the priority "1".

(Step S315) The terminal 20-1a receives the emergency information (message ID "A000") associated with the priority "1" from the self-managed network NW1.

(Step S317) The terminal 20-1a checks the priority associated with the received emergency information (message ID "A000") and confirms that the priority is "1" which is the same as the priority of the message ID "A000" in the self-managed network NW1 to which the terminal 20-1a is communicatively connected. The terminal 20-1a configures the received emergency information (message ID "A000") as a notification target, and the process proceeds to step S319.

(Step S319) The terminal 20-1a displays "fire occurrence" with the priority "1" on the display unit 21 as the emergency information based on the message ID "A000" by application program processing.

(Step S321) The terminal 20-1b receives the emergency information (message ID "A000") associated with the priority "1" from the self-managed network NW1, similarly to the terminal 20-1a.

(Step S323) The terminal 20-1b checks the priority associated with the received emergency information (message ID "A000") and confirms that the priority is "1" which is the same as the priority of the message ID "A000" in the self-managed network NW1 to which the terminal 20-1b is communicatively connected. The terminal 20-1b configures the received emergency information (message ID "A000") as a notification target, and the process proceeds to step S325.

(Step S325) The terminal 20-1b displays "fire occurrence" with the priority "1" on the display unit 21 as the emergency information based on the message ID "A000" by application program processing. Note that although the terminal 20-1b has already received the same message ID "A000" in step S309, the message ID is discarded in step S311 and thus a duplication of the message ID is not detected and the displaying can be made.

Note that in the present embodiment, the terminal 20 discards the emergency information (message ID) received from another self-managed network NW (for example, step S311 in FIG. 8), but the terminals 20 may exclude the emergency information from the communication target without discarding the emergency information. For example, the terminal 20 may not discard the emergency information (message ID) received from the other self-managed network NW and may not perform the displaying, the outputting the notification sound, or the like for the emergency information. The terminal 20 may display, without discarding, the emergency information (message ID) received from the other self-managed network NW as emergency information of a self-managed network NW other than the self-managed network NW to which the terminal 20 is communicatively connected. In a case that the terminal 20 detects a duplication of the emergency information (message ID) received from the self-managed network NW to which the terminal 20 is communicatively connected, the terminal 20 may detect a duplication of only the emergency information (message ID) received from the self-managed network NW by checking the priority without discarding the emergency information (message ID) received from the other self-managed network NW.

In addition, for example, in the process illustrated in FIG. 8, because the priority of the emergency information (message ID) received in step S321 from the self-managed network NW1 to which the terminal 20-1b is communicatively connected is higher than the priority of the emergency information (message ID) received from another self-managed network NW2 in step S309, the terminal 20-1b may display "fire occurrence" on the display unit 21 in step S325 even in the case that the message IDs are the same (even in the case a duplication is detected). In this way, the message ID having a higher priority is configured as a notification target even in the case that a duplication of the same message ID is detected, and thus a notification of information with a high degree of urgency can be prevented from not being made.

At this time, the terminal 20-1b may or may not discard the emergency information (message ID) received from another self-managed network NW2 in step S309 to exclude the emergency information from the notification target. The terminal 20-1b may display, without discarding, the emergency information (message ID) received from the other self-managed network NW2 in step S309 as emergency information of a self-managed network NW other than the self-managed network NW1 to which the terminal 20-1b is communicatively connected.

Next, a notification method of emergency information in accordance with the priority is described. The terminal 20, in the case of receiving the emergency information (message ID), makes a notification of the emergency information based on the message ID based on the priority associated with the emergency information (message ID). For example, the terminal 20, in the case of receiving the emergency information (message ID), preferentially makes a notification of the emergency information based on the message ID having a higher priority based on the priority associated with the emergency information (message ID).

As an example, in a case that the terminal 20 displays a list of multiple pieces of emergency information in the order of reception, the terminal 20 may preferentially display the emergency information having a high priority at the top (for example, the uppermost top) of the list regardless of the order of reception. As another example, the terminal 20 may display the emergency information having a higher priority to appear larger than the emergency information having a lower priority, or may not display the emergency information having a lower priority while displaying the emergency information having a higher priority. As a result, information with a high priority (high degree of urgency) can be prevented from being buried due to information having a low priority (low degree of urgency) to be received thereafter.

Note that the terminal 20 may not preferentially display the emergency information having a high priority, and may simply display the emergency information associated with the priority so that the user can recognize the priority (degree of urgency).

As described above, in the present embodiment, the priority of each message ID is configured for each of the multiple self-managed networks NW in accordance with the content of the emergency information. The base station 10, in a case of transmitting information including the message ID as the emergency information, transmits the information associated with the priority configured for the message ID. The terminal 20, in the case of receiving the message ID, uses the priority associated with the received messaged ID as the identification information of the self-managed network NW, and configures the emergency information based on the message ID as a notification target only in a case that the priority associated with the received message ID matches a priority configured in the self-managed network NW to which the terminal 20 is communicatively connected.

As a result, in the case that the emergency information is distributed in the multiple self-managed networks NW, the network system SYS can make a notification of only the emergency information from the self-managed network (own network) to which the terminal 20 is communicatively connected by using the priority of the emergency information. Therefore, the network system SYS can appropriately make a notification of the emergency information from the self-managed network (own network) to which the terminal 20 is communicatively connected.

The terminal 20, in the case of receiving the message ID, makes a notification of the emergency information based on the message ID based on the priority associated with the message ID.

Accordingly, in the network system SYS, the terminal 20 can appropriately make a notification of the emergency information from the self-managed network (own network) to which the terminal 20 is communicatively connected in accordance with the priority.

For example, the terminal 20, in the case of receiving the message ID, preferentially makes a notification of the emergency information based on the message ID having a higher priority based on the priority associated with the message ID.

Accordingly, in the network system SYS, the terminal 20 can suppress a notification of information with a high degree of urgency not being made. For example, the terminal 20 can prevent information with a high priority (high degree of urgency) from being buried due to information having a low priority (low degree of urgency) to be received thereafter.

Although the embodiments of the present invention have been described in detail above with reference to the drawings, the specific configuration is not limited to the embodiments described above and includes designs and the like that do not depart from the gist of the present invention. For example, the configurations described in the above embodiments can be arbitrarily combined.

Note that as described in the above embodiments, a device that receives a specific message ID distributed in the self-managed network NW for the device may perform specific control so long as the device can identify emergency information distributed from the self-managed network NW for the device by using the network identifier, the network name, the priority of each emergency information (message ID), or the like. Thus, by distributing emergency information of a specific message ID from the self-managed network NW, control can be performed to emergently stop a device that has received the message ID, for example. For example, distributing a message ID of emergency information at the time of occurrence of an earthquake can cause a device in a factory that has received the message ID to be emergently stopped, or distributing a message ID of emergency information of detection of a person intruding into a specific area (for example, a machine operation area) can cause a machine in the area where the message ID has been received to be emergently stopped. In addition, distributing a message ID of emergency information of gas leakage detection can cause a gas pipe valve where the message ID has been received to be closed, or distributing a message ID of emergency information of fire occurrence can cause a sprinkler where the message ID has been received to be operated.

As described above, according to the method using the emergency information, not only the device in communicative connection with the self-managed network NW but also the device not in connection with the self-managed network NW can be caused to be emergently stopped in a case that the radio wave reaches the devices. This is an advantage in that resources are effectively utilized because there is originally a demerit that communication resources are consumed while communicative connection is made to the self-managed network NW although communicative connection is unnecessary. The emergency information can used as a trigger for some operation other than the emergency stop of the device. For example, control can be performed to cause a specific device to perform a specific operation such as turning on a warning lamp, operating a monitoring camera, or an in-house broadcast for a heavy rain warning.

Note that at least some of the devices that perform communication in the above-described network system SYS may include a computer system therein. Further, a program for enabling functions of each of configurations included in each device performing communication in the network system SYS described above may be recorded on a computer-readable recording medium, and a computer may be caused to read and execute the program recorded on the recording medium to perform the processing of each of the configurations included in each device performing communication in the network system SYS described above. Here, "a computer system being caused to read and execute a program recorded on a recording medium" includes installing the program in the computer system. The "computer system" here includes an OS and hardware components such as a peripheral device. The "computer system" may include multiple computer apparatuses connected over a network including a communication line such as the Internet, a WAN, a LAN, or a dedicated line. A "computer-readable recording medium" refers to a portable medium such as a flexible disk, a magneto-optical disk, a ROM, and a CD-ROM, and a storage apparatus such as a hard disk built into the computer system. As described above, the recording medium storing the program may be a non-transitory recording medium such as a CD-ROM.

The recording medium also includes a recording medium provided internally or externally and accessible from a distribution server for distributing the program. Note that the program may be divided into multiple programs, and the divided programs may be downloaded at different timings and then combined with components included in devices that perform communication in the network system SYS. Alternatively, the divided programs may be distributed to different distribution servers. Moreover, the "computer-readable recording medium" may include a medium that retains the program for a fixed period of time, such as a volatile memory (RAM) within the computer system which functions as a server or a client in that case the program is transmitted over a network. The program may be a program for realizing some of the functions described above. Furthermore, the program may be that capable of implementing the functions described above in combination with a program already recorded in the computer system, a so-called differential file (differential program).

Additionally, the functions of each device performing communication in the network system SYS in the embodiments described above may be partially or completely realized as an integrated circuit such as a Large Scale Integration (LSI) circuit. The functions may be individually realized as processors, or may be partially or completely integrated into a processor. In addition, the circuit integration technique is not limited to LSI, and may be realized as dedicated circuits or a multi-purpose processor. Furthermore, in a case that advances in the semiconductor technology lead to the advent of a circuit integration technology that replaces LSI, an integrated circuit based on the technology may be used.

## Claims

1. A network system comprising:
base stations in multiple respective networks; and
a terminal capable of communicative connection to any one of the multiple networks via radio communication, wherein
first identification information capable of identifying each of the multiple networks is configured in advance,
a base station of the base stations transmits emergency information to the terminal existing in a radio communication service area of the base station to allow the emergency information to be received by the terminal regardless of whether the terminal is communicatively connected to the base station, the emergency information being associated with the first identification information configured for a network of the multiple networks to which the base station is communicatively connected, and
the terminal includes
a receiver configured to receive the emergency information associated with the first identification information from the base station, and
a controller configured to configure, in a case that the receiver receives the emergency information, only the emergency information received from the network to which the terminal is communicatively connected as a notification target, based on the first identification information associated with the emergency information.

2. The network system according to claim 1, wherein
multiple pieces of second identification information are defined which are associable with respective contents of the emergency information,
the multiple pieces of second identification information are associated with the respective contents of the emergency information in advance for each of the multiple networks,
the base station transmits information including second identification information of the multiple pieces of second identification information as the emergency information, and
the controller configures, in a case of receiving the second identification information, only the emergency information based on the second identification information received from the network to which the terminal is communicatively connected as the notification target, based on the first identification information associated with the second identification information.

3. The network system according to claim 2, wherein
for a certain period of time after notification of the emergency information based on the second identification information received from the network to which the terminal is communicatively connected, the controller excludes the emergency information from the notification target even in a case of receiving the same second identification information from the network to which the terminal is communicatively connected.

4. The network system according to claim 2 or 3, wherein
the controller excludes the emergency information based on the second identification information from the notification target in a case of receiving the second identification information from another network different from the network to which the terminal is communicatively connected, and configures, in a case of receiving the second identification information from the network to which the terminal is communicatively connected regardless of a subsequent elapsed time, the emergency information as the notification target even in a case that the received second identification information is the same as the second identification information received over the other network.

5. The network system according to claim 4, wherein
the controller excludes the emergency information from the notification target by discarding the second identification information in the case of receiving the second identification information from another network different from the network to which the terminal is communicatively connected.

6. The network system according to claim 1, wherein
the first identification information is identification information of the base station included in each of the multiple networks.

7. The network system according to claim 1, wherein
the first identification information is identification information of a core network included in each of the multiple networks.

8. The network system according to claim 1, wherein
the first identification information is included in a system information block for broadcasting the emergency information.

9. The network system according to claim 1, wherein
the first identification information is included in a Secondary Notification of an Earthquake and Tsunami Warning System (ETWS) in a case that the emergency information is based on the ETWS.

10. The network system according to claim 2, wherein
a priority of each piece of second identification information is configured for each of the multiple networks in accordance with a content of the emergency information,
the base station transmits, in a case of transmitting information including the second identification information as the emergency information, the information in association with the priority configured for the second identification information, and
the terminal uses, in the case of receiving the second identification information and as the first identification information, the priority associated with the received second identification information, and configures the emergency information as the notification target only in a case that the priority associated with the received second identification information matches a priority configured in the network to which the terminal is communicatively connected.

11. The network system according to claim 10, wherein
the terminal makes, in the case of receiving the second identification information, a notification of the emergency information based on the second identification information, based on the priority associated with the second identification information.

12. The network system according to claim 11, wherein
the terminal preferentially makes, in the case of receiving the second identification information, a notification of the emergency information based on the second identification information having a higher priority, based on the priority associated with the second identification information.

13. A terminal capable of communicative connection to any one of base stations in multiple respective networks via radio communication,
first identification information capable of identifying each of the multiple networks being configured in advance,
the terminal comprising:
a receiver configured to receive emergency information associated with the first identification information from a base station of the base stations in a case that the terminal exists in a radio communication service area of the base station regardless of whether the terminal is communicatively connected to the base station; and
a controller configured to configure, in a case that the receiver receives the emergency information, only the emergency information received from a network of the multiple networks to which the terminal is communicatively connected as a notification target, based on the first identification information associated with the emergency information.

14. A notification method of emergency information in a network system, the network system including base stations in multiple respective networks, and a terminal capable of communicative connection to any one of the multiple networks via radio communication,
first identification information capable of identifying each of the multiple networks being configured in advance,
the notification method comprising the steps of:
transmitting, by a base station of the base stations, emergency information to the terminal existing in a radio communication service area of the base station to allow the emergency information to be received by the terminal regardless of whether the terminal is communicatively connected to the base station, the emergency information being associated with the first identification information configured for a network of the multiple networks to which the base station is communicatively connected;
receiving, by the terminal, the emergency information associated with the first identification information from the base station; and
configuring, by the terminal and in a case that the emergency information is received, only the emergency information received from the network to which the terminal is communicatively connected as a notification target, based on the first identification information associated with the emergency information.

15. A notification method of emergency information in a terminal, the terminal capable of communicative connection to any one of base stations in multiple respective networks via radio communication,
first identification information capable of identifying each of the multiple networks being configured in advance,
the notification method comprising the steps of:
receiving, by the terminal, emergency information associated with the first identification information from a base station of the base stations in a case that the terminal exists in a radio communication service area of the base station regardless of whether the terminal is communicatively connected to the base station; and
configuring, by the terminal, in a case that the emergency information is received, only the emergency information received from a network of the multiple networks to which the terminal is communicatively connected as a notification target, based on the first identification information associated with the emergency information.
